# EUROPÄISCHE PATENTSCHRIFT

(11) **EP 3 016 814 B1**
(45) Veröffentlichungstag und Bekanntmachung des Hinweises auf die Patenterteilung: **28.02.2018**
(21) Anmeldenummer: 14747816.8
(22) Anmeldetag: 25.06.2014
(51) Int. Cl.: B60K 26/02, G05G 1/38, G05G 5/03, B60W 30/14, B60W 30/16, B60K 31/00, B60W 50/16

(54) **VERFAHREN, STEUERUNG UND SYSTEM ZUR STEUERUNG EINES FAHRPEDALS MIT KRAFTRÜCKWIRKUNG ALS ASSISTENZSYSTEM ZUR ABSTANDS- ODER GESCHWINDIGKEITSREGELUNG IM STRASSENVERKEHR**
METHOD, CONTROL AND SYSTEM FOR CONTROLLING AN ACCELERATOR FORCE FEEDBACK PEDAL (AFFP) AS ASSISTANCE SYSTEM FOR DISTANCE OR SPEED CONTROL IN TRAFFIC
PROCÉDÉ, COMMANDE ET SYSTÈME POUR COMMANDER UNE PÉDALE À RÉTROACTION DE FORCE D'ACCÉLÉRATEUR SERVANT DE SYSTÈME D'AIDE AU RÉGLAGE DE DISTANCES OU DES VITESSES DANS LA CIRCULATION ROUTIÈRE

(30) Priorität: 04.07.2013 DE 102013213050
(43) Veröffentlichungstag der Anmeldung: 11.05.2016
(73) Patentinhaber: Conti Temic microelectronic GmbH, 90411 Nürnberg (DE)
(72) Erfinder: DREWS, Frank, 90552 Röthenbach (DE); LEONE, Carmelo, 85354 Freising (DE)
(74) Vertreter: Thiel, Linda
(86) Internationale Anmeldenummer: PCT/DE2014/200281
(87) Internationale Veröffentlichungsnummer: WO 2015/000480

(56) Entgegenhaltungen:
- EP-A2- 1 426 230
- WO-A1-2005/105508
- DE-A1- 19 620 929
- DE-A1-102011 079 375
- US-A- 5 568 797

## Beschreibung

Die Erfindung betrifft ein Verfahren zur Regelung der Rückstellkraft einer Steuerungseinheit von Kraftfahrzeugen. Bei einer Steuerungseinheit kann es sich beispielsweise um ein Gaspedal handeln, wie es im PKW oder LKW Verwendung findet, oder um einen Gasgriff wie er beispielsweise an Motorrädern oder Quads verwendet wird. Um eine solche Steuerungseinheit zu betätigen, muss im Allgemeinen eine Betätigungskraft auf die Steuerungseinheit aufgebracht werden. Beispielsweise muss ein Gaspedal mit dem Fuß herabgedrückt, oder ein Gasgriff mit der Hand gedreht werden. Ist die aufgebrachte Betätigungskraft hinreichend groß, so wird die Steuerungseinheit aus einer Ruhelage ausgelenkt. Der Grad der Auslenkung wird auf mechanischem oder elektronischem Wege an eine Motorsteuerungseinheit weitergegeben und dort in eine entsprechende Motorlast umgesetzt.

Üblicherweise beinhalten die zuvor beschriebenen Steuerungseinheiten Mittel, welche eine Rückstellkraft auf die Steuerungseinheiten bewirken. Die Rückstellkraft wirkt hierbei im Allgemeinen der Betätigungskraft entgegen und in Richtung der Ausgangslage der Steuerungseinheit. Beispielsweise kann eine solche Rückstellkraft durch einen Federmechanismus oder auf elektrischem Wege durch einen Torquemotor, welcher mit der Steuerungseinheit gekoppelt ist, bewirkt werden. Gängige Rückstellmechanismen sind so ausgebildet, dass die Rückstellkraft über den gesamten Auslenkungsbereich konstant ist oder zu größeren Auslenkungen der Steuereinheit hin zunimmt.

Die Auslenkung der Steuerungseinheit aus der Ruhelage kann durch einen Auslenkungswinkel φ beschrieben werden. Beispielsweise kann der Auslenkungswinkel φ so definiert sein, dass für die Ruhelage der Steuerungseinheit der Auslenkungswinkel φ gleich Null ist, während der Auslenkungswinkel für eine maximale Auslenkung der Steuerungseinheit zu einem festen Wert definiert ist. Die Auslenkung der Steuerungseinheit kann beispielsweise auch in Prozent der maximalen Auslenkung beschrieben werden. Dabei entspricht die Ausgangslage der Steuerungseinheit einer Auslenkung von 0 %, während die maximale Auslenkung der Steuerungseinheit, auch als "Vollgas" bezeichnet, einer Auslenkung von 100 % entspricht.

Klassische Abstandsregeltempomaten greifen aufgrund des mittels Umfeldsensors erkannten Abstands erforderlichenfalls in die Motorsteuerung ein, regeln insbesondere die Kraftstoffzufuhr und damit letztlich Drehzahl und Drehmoment des Motors unmittelbar und ohne Berücksichtigung oder gar Beeinflussung der Position der manuellen Steuerungseinheit.

Darüber hinaus ist aus der WO 2005/105508 bereits der Hinweis zu entnehmen, bei einem sogenannten Force-Feedback-Pedal, also einer Steuerungseinheit mit einer Rückstellvorrichtung aktiv an der Position der Steuerungseinheit Einfluss zu nehmen, welche dann natürlich mittelbar ebenfalls wieder auf die Motorsteuerung wirkt.

In der DE 10 2010 031 080 A1 wird darüber hinaus ein Reglerkonzept für eine Vorrichtung zur Erzeugung einer Rückstellkraft an einem Gaspedal vorgestellt, bei welchem für unterschiedliche Betriebssituationen, insbesondere für eine Folgefahrt als auch eine Verzögerungsfahrt jeweils ein separater Regler vorgesehen ist. Separate Regler ermöglichen eine individuelle Parametrierung des Reglers und damit dessen Regelverhaltens an die jeweilige Betriebssituation, erhöhen aber den Aufwand, selbst wenn heutzutage Regler häufig als Softwaresteuerung aufgebaut werden, da auch in Software Speicherplatz und Rechenzeit zu berücksichtigen sind.

Aufgabe der Erfindung ist es, einen verbesserten Regler, eine Steuerungseinheit für ein Kraftfahrzeug mit einem solchen Regler sowie ein Verfahren zu deren Betrieb zu schaffen, welche als Assistenzsystem unter anderem für eine Abstandsregelung im Straßenverkehr einsetzbar ist.

Die Lösung der Aufgabe erfolgt erfindungsgemäß durch die Merkmale der unabhängigen Ansprüche. Vorteilhafte Ausgestaltungen, Weiterbildungen und Varianten der Erfindung sind in den Unteransprüchen angegeben.

Nach einer Ausführungsform der Erfindung wird durch einen Regelkreis ein Sollwinkel φₛₒₗₗ der Auslenkung der Steuerungseinheit bestimmt.

Dazu ist ein Regler vorgesehen, welcher Eingänge zur Zuführung von Signalen einer Geschwindigkeit v_{act} des Kraftfahrzeugs, einer Relativgeschwindigkeit vᵣₑₗ des Kraftfahrzeugs zu einem vorausfahrenden Kraftfahrzeug, einem Sollabstand dₛₒₗₗ zum vorausfahrenden Kraftfahrzeug und einem Ist-Abstand dᵢₛₜ zum vorausfahrenden Kraftfahrzeug aufweist. Die entsprechenden Sensoren sind in der Regel nicht Bestandteil des Reglers selbst, also beispielsweise einer entsprechenden elektronischen Reglerelektronikeinheit.

Der Regler beinhaltet einen PD-Regler, um einen ersten Sollwinkelbeitrag 17 auf Basis der Differenz von Sollabstand dₛₒₗₗ zu Ist-Abstand dᵢₛₜ zu erzeugen und eine zum PD-Regler parallele Vorsteuerung 21, wobei um auf Basis der Geschwindigkeit v_{act}, der Relativgeschwindigkeit vᵣₑₗ und einer gewichteten Abweichung des Ist-Abstands dᵢₛₜ vom Sollabstand dₛₒₗₗ einen zweiten Sollwinkelbeitrag 16 zu erzeugen.

Zudem ist ein Summierer 28 vorgesehen, um zumindest aus diesen beiden Sollwinkelbeiträgen den Sollwinkel zu bestimmen.

Der Regler ist als eine vom Stellglied getrennte oder aber in das Stellglied baulich integrierte Reglerelektronikeinheit ausführbar und dementsprechend gegebenenfalls separat handelbar.

In einer bevorzugten Ausgestaltung ist der Regler ferner dazu ausgebildet, den Betrag einer Abstandsregelungsabweichung (u) als Differenz von Sollabstand (dₛₒₗₗ) und Ist-Abstand (dᵢₛₜ) zu erfassen und bei Überschreiten eines Schwellwerts dieser Abstandsregelungsabweichung (u) den Betrag des Sollwinkels (φₛₒₗₗ) durch einen dritten Sollwinkelbeitrag (18) zu erhöhen, wenn der Betrag einer Abstandsregelungsabweichung (u) negativ ist, oder zu verringern, wenn Betrag einer Abstandsregelungsabweichung (u) positiv ist. Dadurch kann bei stärkeren Abstandsregelungsabweichungen mit einer höheren Regeldynamik eingegriffen werden.

In einer weiteren bevorzugten Ausgestaltung ist der Regler ferner dazu ausgebildet, bei einer geringen Geschwindigkeit (v_{act}) des Kraftfahrzeugs und bei einem geringen Abstand (dᵢₛₜ) des Kraftfahrzeugs zu einem vorausfahrenden Kraftfahrzeug, wie diese bei Anfahrsituationen vorkommen, mittels weiteren Sollwinkelbeitrags (19) den Betrag des Sollwinkels (φₛₒₗₗ) zu erhöhen. Auch hier wird also bei der besonderen Verkehrssituation nicht komplett ein anderer Regler aktiv, sondern nur ein zusätzlicher Sollwinkelbeitrag.

In einer besonders bevorzugten Ausgestaltung werden diese beiden Konzepte so miteinander kombiniert, dass eine Rückkopplung integriert wird, indem nämlich der Einheit zur Erzeugung des dritten Sollwinkelbeitrags die Summe der anderen Sollwinkelbeiträge (16,17,19) als zusätzliche Eingangsgröße rückgekoppelt erhält und in Abhängigkeit von der Abstandsregelungsabweichung (u) und den anderen Sollwinkelbeiträgen den dritten Sollwinkelbeitrag (18) ermittelt.

Ferner wird für die Durchführung des Verfahrens im Gesamtsystem die aktuelle Auslenkung φᵢₛₜ der Steuerungseinheit beispielsweise durch geeignete Sensoren ebenfalls ermittelt. In Abhängigkeit der Differenz von aktueller Auslenkung φᵢₛₜ und Sollwinkel φₛₒₗₗ wird dann die Rückstellkraft auf die Steuerungseinheit moduliert. Bei einer Rückstellkraft kann es sich sowohl um eine Kraft, als auch um ein Drehmoment handeln.

Der Sollwinkel φₛₒₗₗ kann beispielsweise so bestimmt sein, dass durch eine Auslenkung der Steuerungseinheit zu diesem Winkel φₛₒₗₗ die Motorlast des Kraftfahrzeugs so angepasst wird, dass eine Unterschreitung eines vordefinierten Sicherheitsabstands des Kraftfahrzeugs zu einem vorausfahrenden Kraftfahrzeug vermieden wird. Die Modulation der Rückstellkraft auf die Steuerungseinheit kann hierbei beispielsweise dergestalt sein, dass für eine Auslenkung der Steuerungseinheit, die kleiner als der Sollwinkel φₛₒₗₗ ist, die Rückstellkraft auf die Steuerungseinheit konstant bleibt. Überschreitet jedoch die Auslenkung φᵢₛₜ den Sollwinkel φ_{soll l}, so nimmt die Rückstellkraft auf die Steuerungseinheit stark zu. Somit müsste der Fahrzeugführer für eine weitere Betätigung der Steuerungseinheit über den Sollwinkel φₛₒₗₗ hinaus eine deutlich erhöhte Betätigungskraft auf die Steuerungseinheit aufbringen. Der erhöhte Kraftaufwand würde jedoch durch den Fahrzeugführer bewusst oder unterbewusst wahrgenommen, so dass durch die zuvor beschriebene Modulation der Rückstellkraft auf die Steuerungseinheit die Übertragung einer haptischen Rückmeldung bzw. Signal an den Fahrzeugführer erfolgt. Es steht dem Fahrzeugführer jedoch frei, durch eine weitere Erhöhung der Betätigungskraft die Steuerungseinheit weiter auszulenken, um die Motorlast zu erhöhen, beispielsweise um einen Überholvorgang einzuleiten.

Die Modulation der Rückstellkraft auf die Steuerungseinheit kann ferner so ausgeprägt sein, dass kurz vor Erreichen des Sollwinkels φₛₒₗₗ die Rückstellkraft auf die Steuerungseinheit reduziert wird, und bei Erreichen des Sollwinkels φₛₒₗₗ stark erhöht wird. Durch eine solche Senke im Kraftverlauf der Rückstellkraft würde die zuvor genannte haptische Rückmeldung durch den Fahrzeugführer leichter wahrgenommen.

Es ist ebenfalls möglich, dass die Modulation der Rückstellkraft so gestaltet ist, dass der Fahrzeugführer bei Überschreiten des Sollwinkels φₛₒₗₗ eine Vibration der Steuerungseinheit wahrnimmt. Hierdurch würde der Fahrzeugführer zwar darüber informiert, dass die Gefahr einer extremen Unterschreitung des Sollabstands besteht.

Hierbei ist zu beachten, dass die Verfahrensschritte der Bestimmung eines Sollwinkels φₛₒₗₗ, der Bestimmung einer aktuellen Auslenkung φᵢₛₜ und der Modulation der Rückstellkraft auf die Steuerungseinheit in Abhängigkeit der Differenz von aktueller Auslenkung φᵢₛₜ und Sollwinkel φₛₒₗₗ erfindungsgemäß in sehr kurzen Zeitabständen immer wieder durchgeführt werden, wodurch die Rückstellkraft der Steuerungseinheit kontinuierlich geregelt wird.

Das zuvor beschriebene Verfahren ist besonders vorteilhaft, da bei modernen Kraftfahrzeugen häufig das Problem besteht, dass dem Fahrzeugführer eine Vielzahl von Informationen präsentiert werden. Dies kann zu einer Reizüberflutung des Fahrzeugführers durch akustische und optische Signale führen, wodurch der Fahrzeugführer beim Führen des Fahrzeugs im Straßenverkehr von dem Verkehrsgeschehen abgelenkt werden kann. Infolgedessen neigt der Fahrzeugführer dazu, einige der Signale nicht mehr wahrzunehmen oder er kann sie nicht mehr richtig zuordnen. Dieses Problem wird durch das erfindungsgemäße Verfahren gelöst, da die Übermittlung von Informationen an den Fahrzeugführer durch die Übertragung haptischer Signale erfolgt, die durch den Fahrzeugführer unterbewusst wahrgenommen werden können und somit die Wahrnehmung weiterer Signale nicht oder nur sehr geringfügig beeinflussen.

Ferner ist es, insbesondere aufgrund des immer dichter werdenden Verkehrs, vorteilhaft eine automatische Regulierung des Abstands zu einem vorausfahrenden Fahrzeug in die Fahrzeugsteuerung zu implementieren, welche ohne optische oder akustische Signale auskommt. Insbesondere in stressbehafteten Verkehrssituationen wie beispielsweise dichtem Straßenverkehr zu Stoßzeiten könnten zusätzliche optische oder akustische Signale dazu führen, dass andere Informationen übersehen oder fehlinterpretiert werden. Daher ist es vorteilhaft, den Fahrer in der Wahl eines optimalen Abstands zu einem vorausfahrenden Fahrzeug durch klare, haptische Informationen über die Steuerungseinheit des Kraftfahrzeugs zu unterstützen.

Nach einer Ausführungsform der Erfindung bestimmt der Regelkreis den Sollwinkel auf Grundlage einer Geschwindigkeit v_{act} des Kraftfahrzeugs, einer Relativgeschwindigkeit vᵣₑₗ des Kraftfahrzeugs zu einem vorausfahrenden Kraftfahrzeug, einem Soll-Abstand dₛₒₗₗ zum vorausfahrenden Kraftfahrzeug und einen Ist-Abstand dᵢₛₜ zum vorausfahrenden Kraftfahrzeug. Dies hat den Vorteil, dass alle vorgenannten Größen mit geringem technischen Aufwand bestimmt werden können. So kann die aktuelle Geschwindigkeit v_{act} des Kraftfahrzeugs durch einen Tachometer bestimmt werden, wie er üblicherweise in jedem Kraftfahrzeug zu finden ist. Der Abstand des Kraftfahrzeugs zu einem vorausfahrenden Kraftfahrzeug dᵢₛₜ kann beispielsweise durch ein Abstandsradar ermittelt werden. Aus der zeitlichen Änderung des Abstands dᵢₛₜ kann die Relativgeschwindigkeit vᵣₑₗ des Kraftfahrzeugs zu einem vorausfahrenden Kraftfahrzeug bestimmt werden. Der Soll-Abstand dₛₒₗₗ ist eine frei definierbare Größe. Beispielsweise kann der Soll-Abstand gemäß den Regelungen der vorherrschenden Rechtsprechung in Abhängigkeit der Geschwindigkeit v_{act} des Kraftfahrzeugs bestimmt werden oder durch einen gewählten Fahrmodus des Kraftfahrzeugs bestimmt sein.

In einem weiteren Aspekt betrifft die vorliegende Erfindung ein Steuerungssystem für ein Kraftfahrzeug mit:
- einer Steuerungseinheit, wobei es sich bei der Steuerungseinheit um ein Gaspedal oder einen Gasgriff handelt und wobei die Steuerungseinheit aus einer Ausgangslage durch Aufbringen einer Betätigungskraft auf die Steuerungseinheit auslenkbar ist,
- einem Auslenkungssensor, wobei der Auslenkungssensor ein Auslenkungssignal erzeugen kann, aus welchem die aktuelle Auslenkung φᵢₛₜ der Steuerungseinheit bestimmt werden kann,
- einem Rückstellmechanismus, wobei der Rückstellmechanismus eine Rückstellkraft auf die Steuerungseinheit bewirken kann, wobei die Rückstellkraft der Betätigungskraft entgegen wirkt,
- einem Aktuator, wobei der Aktuator so mit der Steuerungseinheit gekoppelt ist, dass er die Rückstellkraft auf die Steuerungseinheit durch Aufbringen einer zusätzlichen Rückstell- oder Betätigungskraft in Abhängigkeit des Auslenkungssignals modulieren kann.

In einer weiteren vorteilhaften Ausführungsform des erfindungsgemäßen Steuerungssystems ist der Regler ferner dazu ausgebildet, bei Überschreiten eines Schwellwerts für den Betrag einer Abstandsregelungsabweichung den Betrag des Sollwinkels zu erhöhen, wenn die Abstandsregelungsabweichung negativ ist, oder zu verringern, wenn die Abstandsregelungsabweichung positiv ist, wobei die Abstandsregelungsabweichung durch die Differenz von Sollabstand und Ist-Abstand gegeben ist.

Im Weiteren werden Ausführungsformen der Erfindung mit Bezugnahme auf die Zeichnungen näher erläutert. Es zeigen:
- Fig. 1: ein Blockdiagramm eines Steuerungssystems,
- Fig. 2: eine schematische Darstellung einer Steuerungseinheit, die zur Durchführung des erfindungsgemäßen Verfahrens geeignet ist,
- Fig. 3: ein Blockdiagramm eines erfindungsgemäßen Regelkreises zur Regelung des Pedalsollwinkels φₛₒₗₗ.

Im Weiteren werden Elemente der nachfolgenden Ausführungsformen, die einander entsprechen oder identisch sind, jeweils mit denselben Bezugszeichen gekennzeichnet.

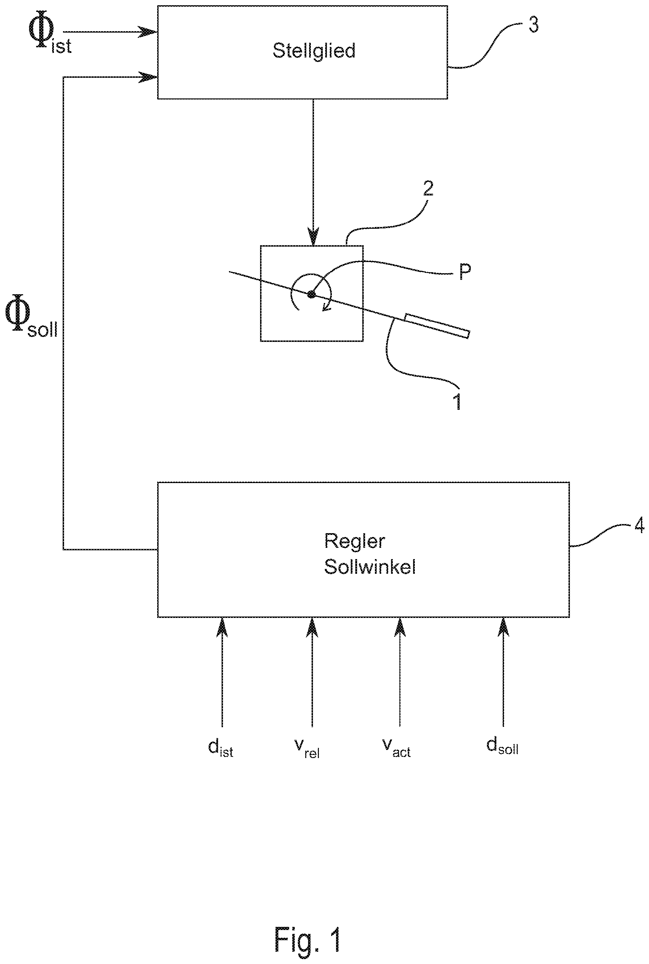

In Figur 1 ist ein Blockdiagramm eines erfindungsgemäßen Steuerungssystems dargestellt. In der dargestellten Ausführungsform handelt es sich bei der Steuerungseinheit 1 um ein Fahrpedal wie es beispielsweise im PKW und LKW verwendet wird. Bei dem dargestellten Fahrpedal handelt es sich um eine sogenannte hängende Fahrpedaleinheit. Grundsätzlich ist das hier beschriebene Verfahren jedoch auch für sogenannte stehende Fahrpedaleinheiten oder für Gasgriffe anwendbar.

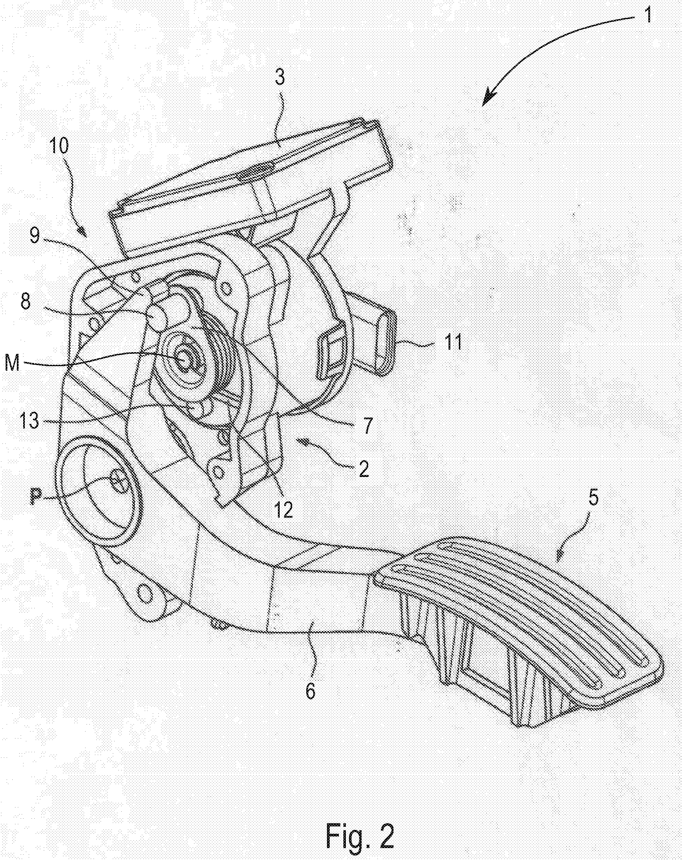

In Figur 2 ist eine Steuerungseinheit schematisch dargestellt, an welcher das erfindungsgemäße Verfahren durchgeführt werden kann. Bei der in Figur 2 dargestellten Steuerungseinheit 1 handelt es sich um ein Fahrpedal wie es beispielsweise im PKW oder LKW Verwendung findet. Hierbei ist eine Pedalplatte 5 über einen Pedalhebel 6 drehbar an einem Drehpunkt P gelagert. Durch einen Druck auf die Pedalplatte 5 ist der Pedalhebel 6 nach unten auslenkbar. Ist der Pedalhebel aus einer Nulllage ausgelenkt, so bewirkt eine Pedalrückholfeder (nicht dargestellt) eine Rückstellkraft auf den Pedalhebel 6, so dass dieser bei Nichtbetätigung der Pedalplatte 5 durch die Pedalrückholfeder in seine Ausgangsposition zurückgeschwenkt wird. Die Pedalrückholfeder kann beispielsweise als Schenkelfeder ausgebildet sein.

Das Fahrpedal 1 ist um einen Drehpunkt P drehbar gelagert. Ferner ist das Fahrpedal 1 so mit einem Aktuator 2 verbunden, dass durch den Aktuator 2 eine Kraft auf das Fahrpedal 1 ausgeübt werden kann. Der Aktuator 2 ist mit einem Stellglied 3 so verbunden, dass das Stellglied 3 die durch den Aktuator 2 auf das Fahrpedal 1 ausgeübte Kraft steuern kann, beispielsweise durch eine entsprechende Bestromung, falls es sich bei dem Aktuator um einen elektromechanischen Aktuator, wie beispielsweise einen Torquemotor handelt.

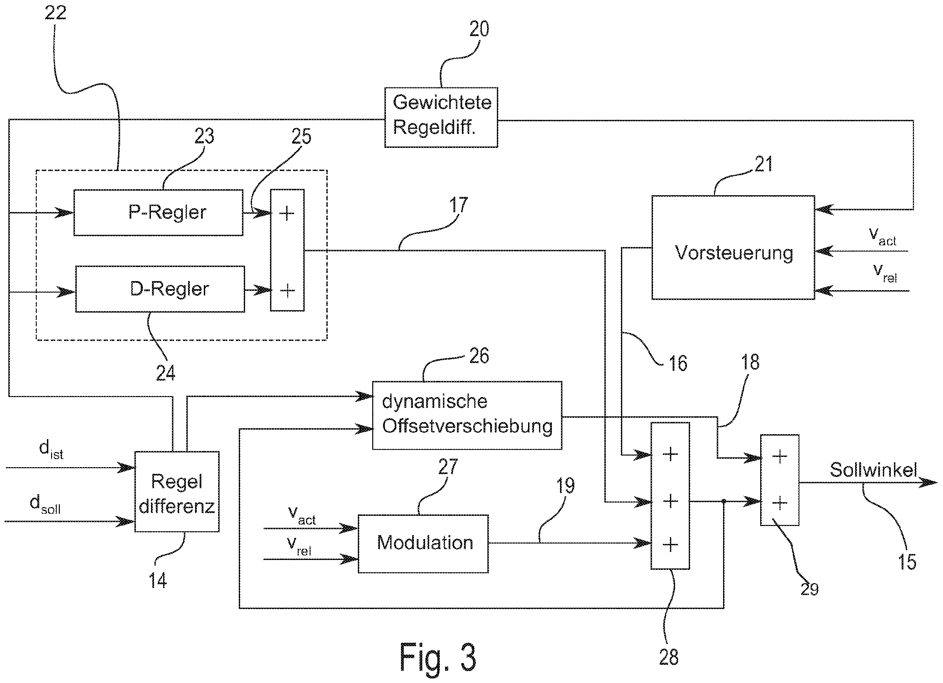

Für die Steuerung des Aktuators 2 nutzt das Stellglied 3 die Eingangsgrößen φᵢₛₜ, also den aktuellen Auslenkungswinkel des Fahrpedals 1 sowie den Sollwinkel des Fahrpedals 1 φₛₒₗₗ. Der Sollwinkel φₛₒₗₗ wird durch einen Regler 4 bestimmt. Erfindungsgemäß bestimmt der erfindungsgemäße und in Figur 3 noch näher erläuterte Regler 4 den Sollwinkel φₛₒₗₗ aus vier Eingangsgrößen:
- Dem aktuellen Abstand dᵢₛₜ des Kraftfahrzeugs zu einem vorausfahrenden Fahrzeug;
- Der Relativgeschwindigkeit des vᵣₑₗ des Kraftfahrzeugs zu einem vorausfahrenden Fahrzeug;
- Der aktuellen Geschwindigkeit v_{act} des Kraftfahrzeugs;
- Dem Soll-Abstand dₛₒₗₗ des Kraftfahrzeugs zu einem vorausfahrenden Fahrzeug.

Die aktuelle Geschwindigkeit des Kraftfahrzeugs v_{act} kann der Regler beispielsweise von einem Tachometer des Kraftfahrzeugs erhalten. Der aktuelle Abstand dᵢₛₜ des Kraftfahrzeugs zu einem vorausfahrenden Kraftfahrzeug kann beispielsweise durch einen Radarsensor ermittelt werden. Aus der Änderung des Abstands dᵢₛₜ lässt sich die Relativgeschwindigkeit vᵣₑₗ des Kraftfahrzeugs zu einem vorausfahrenden Kraftfahrzeug bestimmen. Den Soll-Abstand dₛₒₗₗ des Kraftfahrzeugs zu einem vorausfahrenden Kraftfahrzeug kann der Regler 4 beispielsweise von einem Signalgeber erhalten. Aus den vorgenannten vier Eingangsgrößen bestimmt der Regler 4 im Fahrbetrieb fortlaufend den Sollwinkel φₛₒₗₗ.

Der Sollwinkel φₛₒₗₗ sowie die aktuelle Auslenkung des Fahrpedals φᵢₛₜ werden an das Stellglied 3 weitergegeben. Das Stellglied 3 bestimmt aus der Differenz von Sollwinkel φₛₒₗₗ zu Ist-Winkel φᵢₛₜ ein Signal, welches an den Aktuator 2 weitergegeben wird und eine Modulation der Rückstellkraft auf das Fahrpedal 1 durch den Aktuator 2 bewirkt. Die aktuelle Auslenkung des Fahrpedals 1 φᵢₛₜ kann beispielsweise durch einen Winkelsensor erfasst und an das Stellglied 3 weitergegeben werden.

Ferner beinhaltet die Steuerungseinheit 1 einen Aktuator 2, der beispielsweise als Torquemotor ausgebildet sein kann. Torquemotoren sind für eine Steuerungseinheit zur Durchführung des erfindungsgemäßen Verfahrens besonders geeignet, da sie sehr hohe Drehmomente zur Verfügung stellen können. Auf der Drehachse M des Aktuators 2 ist eine Antriebswelle 7 befestigt. Über die Antriebswelle 7 kann der Aktuator 2 mittels einer Antriebsrolle 8 oder anderer geeigneter Vorrichtungen, wie z.B. gleitende Freiformflächen eine Kraft auf einen Arm 9 ausüben, welcher sich in der Verlängerung des Pedalhebels 6 befindet. Der Aktuator 2 ist also mittelbar mit dem Fahrpedal so gekoppelt, dass eine Kraft auf das Fahrpedal übertragen werden kann. Im hier beschriebenen Ausführungsbeispiel sind die Drehpunkte P und M des Pedalhebels 6 und des Aktuators 2 örtlich getrennt. Es ist aber auch eine Steuerungseinheit denkbar, bei der die beiden Drehpunkte P und M zusammenfallen.

Die zuvor beschriebenen Elemente sind in ein Gehäuse 10 integriert. Weiter umfasst die Steuerungseinheit 1 ein Stellglied 3 sowie eine Schnittstelle 11. Wie zuvor bereits ausgeführt wurde, ist das Stellglied 3 dazu ausgebildet, in Abhängigkeit der Differenz eines Pedalsollwinkels φₛₒₗₗ und eines Pedal-Ist-Winkels φᵢₛₜ den Aktuator 2 so anzusteuern, dass der Aktuator 2 die Rückstellkraft auf den Pedalhebel 6 durch aufbringen einer zusätzlichen Kraft moduliert.

Die Schnittstelle 11 umfasst die Stromversorgung der Elektronik, also beispielsweise die Stromversorgung des elektromechanischen Aktuators 2. Ferner ist die Schnittstelle 11 zum Austausch von Signalen zwischen dem Stellglied 3 und weiteren Steuergeräten außerhalb der Steuerungseinheit 1 über einen Kommunikationsbus im Kraftfahrzeug wie beispielsweise einem CAN-Bus ausgebildet.

Am Aktuator 2 ist eine Aktuatorrückholfeder 12 derart angeordnet, dass die Antriebswelle 7 des Aktuators 2 mittels der Antriebsrolle 8 den Pedalhebel 6 in Richtung von dessen Nulllage drückt, und zwar insbesondere auch dann, wenn der elektromechanische Aktuator 2 nicht bestromt ist. Dabei ist jeweils ein Ende der Pedalrückholfeder sowie der Aktuatorrückholfeder 12 zumindest in Druckrichtung der Feder fest mit dem Gehäuse 10 verbunden, wobei in dem in Figur 2 dargestellten Beispiel das eine Ende der Aktuatorrückholfeder 12 an dem Zapfen 13 des Gehäuses 10 angebracht ist. Das andere Ende der Pedalrückholfeder wirkt auf den Pedalhebel 6 bzw. das der Aktuatorrückholfeder 12 auf die Antriebsscheibe 7. Der Winkelbereich, der durch die jeweiligen Nulllagen und Endlagen der beiden Federn (Pedalrückholfeder und Aktuatorrückholfeder 12) bestimmt ist, ist bei der Aktuatorrückholfeder 12 sowohl bezüglich der Nulllage als auch bezüglich der Endlage größer als bei der Pedalrückholfeder. Dadurch ist gewährleistet, dass die Antriebswelle 7 über die Antriebsrolle 8 zu jeder Zeit am Arm 9 des Pedalhebels 6 anliegt. Die Aktuatorrückholfeder 12 ist somit immer vorgespannt.

Zur Ansteuerung des Aktuators 2, insbesondere durch das in der Steuerungseinheit 1 integrierte Stellglied 10, ist es von Vorteil, die Winkellage α des Aktuators 2 durch einen entsprechenden Sensor, beispielsweise einen Hallsensor, zu erfassen. Entsprechende Sensoren sind in den Figuren nicht gezeigt. Alternativ kann, unter Einsparung des eben genannten Sensors, durch das Stellglied 3 mit Hilfe geeigneter Software aus der Lage des Pedalhebels 6 auf die Winkellage des Aktuators 2 geschlossen werden, sofern die Lage des Pedalhebels 6 dem Stellglied 3 als Signal zur Verfügung gestellt wird. Dies kann beispielsweise durch Einlesen der Lage des Pedalhebels 6 vom Fahrzeug-Kommunikationsbus in das Stellglied 3 über die Schnittstelle 11 geschehen.

Das vorliegende Verfahren schlägt nun vor, die zuvor beschriebene aktive Steuerungseinheit als Assistenzsystem zur Regelung des Abstandes von zwei fahrenden Fahrzeugen im Straßenverkehr einzusetzen.

Der Abstand zwischen zwei Fahrzeugen ist im Allgemeinen nur dann konstant, wenn beide Fahrzeuge mit der gleichen Geschwindigkeit fahren. Änderungen der Geschwindigkeit durch Brems- oder Beschleunigungsvorgänge verändern den Abstand zwischen den beiden Fahrzeugen. Der Abstand zwischen zwei Fahrzeugen kann daher nur dann annähernd konstant gehalten werden, wenn in einem Regelungskonzept diese Änderungen der Geschwindigkeit und damit des Abstands berücksichtigt werden.

Ein gewünschter Sollabstand dₛₒₗₗ kann somit nur dann zu einem vorausfahrenden Fahrzeug eingehalten, bzw. eingenommen werden, wenn die Geschwindigkeit des von dem Fahrzeugführer gefahrenen eigenen Fahrzeugs einer bestimmten Sollgeschwindigkeit vₛₒₗₗ entspricht. Diese Geschwindigkeit vₛₒₗₗ korreliert mit einer Auslenkung der Steuerungseinheit 1 zu einem Sollwinkel φₛₒₗₗ. Das Erreichen des Sollwinkels φₛₒₗₗ wird dem Fahrer durch den Aktuator 2 mitgeteilt, indem bei diesem Wert durch geeignete Ansteuerung des Aktuators 2 eine Modulation der Rückstellkraft auf die Steuerungseinheit 1 erfolgt. Der Fahrer spürt diese Kraftmodulation an seinem Fuß bzw. an seiner Hand und es wird ihm dadurch signalisiert, die Steuerungseinheit 1 nicht weiter zu betätigen, sondern diese Position zu halten oder zu kleineren Auslenkungen hin zu verändern.

Ändert nun jedoch das vorausfahrende Fahrzeug seine Geschwindigkeit, so ändert sich auch der Abstand dᵢₛₜ zwischen den beiden Fahrzeugen. Um erneut einen Sollabstand dₛₒₗₗ zwischen den Fahrzeugen herzustellen muss dieser Abstand größer oder kleiner werden. Der Abstand dᵢₛₜ zu einem vorausfahrenden Fahrzeug ist abhängig von der Geschwindigkeit des vorausfahrenden Fahrzeugs, so dass die Kenntnis der Geschwindigkeit des vorausfahrenden Fahrzeugs notwendig für die Einhaltung des Sollabstandes dₛₒₗₗ ist.

Innerhalb des hier beschriebenen erfindungsgemäßen Verfahrens wird die Geschwindigkeit des vorausfahrenden Fahrzeugs aus der Geschwindigkeit v_{act} des eigenen Fahrzeugs und der Relativgeschwindigkeit vᵣₑₗ zum vorausfahrenden Fahrzeug berechnet, indem die Relativgeschwindigkeit vᵣₑₗ zu der Geschwindigkeit des eigenen Fahrzeugs v_{act} hinzuaddiert wird.

Beträgt die Relativgeschwindigkeit vᵣₑₗ Null, so bewegen sich beide Fahrzeuge mit der gleichen Geschwindigkeit und der Abstand zwischen den Fahrzeugen ändert sich nicht. Zur Ermittlung der Relativgeschwindigkeit ist das Fahrzeug mit entsprechenden Sensoren wie Radarsensoren und einer Elektronik versehen.

Das erfindungsgemäße Regelungskonzept des Reglers 4 zur Bestimmung eines Sollwinkels φₛₒₗₗ ist in Fig. 3 dargestellt. Eine Eingangsgröße der Regelung ist der aktuelle Abstand dᵢₛₜ, der zwischen dem eigenen Fahrzeug und einem vorausfahrenden Fahrzeug beispielsweise mittels eines Radarsensors ermittelt wird. Sollte sich kein Fahrzeug vor dem eigenen Fahrzeug bewegen, so findet das Regelungskonzept keine Anwendung. Von einer Steuereinheit, die hier nicht näher dargestellt ist, wird ein Sollabstand bereitgestellt, der als dₛₒₗₗ bezeichnet wird. Aus dem aktuellen Abstand dᵢₛₜ und dem gewünschten Sollabstand dₛₒₗₗ ergibt sich ein Differenzbetrag, um den der aktuelle Abstand dᵢₛₜ gegenüber dem Sollabstand dₛₒₗₗ verringert oder vergrößert werden soll und der als Regeldifferenz 14 bezeichnet wird. Die Regeldifferenz 14 stellt eines der Eingangssignale des Regelungskonzeptes dar.

Die Ausgangsgröße des erfindungsgemäßen Regelungskonzeptes ist der Sollwinkel φₛₒₗₗ 15, der erfindungsgemäß mehrere unterschiedliche Sollwinkelbeiträge 16, 17, 18 und 19 umfasst. Diese Beträge 16, 17, 18, 19 können anhand unterschiedlicher Algorithmen berechnet werden.

Der erste Sollwinkelbeitrag 16 stellt die Situation dar, in der ein vorausfahrendes Fahrzeug sich mit gleichbleibender Geschwindigkeit bewegt und das eigene Fahrzeug diesem Fahrzeug mit der gleichen Geschwindigkeit folgen soll (vᵣₑₗ=0). Für diesen Regelungsanteil 16 ist allein die Geschwindigkeit des vorausfahrenden Fahrzeugs maßgeblich, die sich aus der Geschwindigkeit des eigenen Fahrzeugs v_{act} und der Relativgeschwindigkeit vᵣₑₗ ergibt. Zu dieser berechneten Geschwindigkeit wird ein Offset 20 addiert, der sich aus der Regeldifferenz und einem empirisch ermittelten konstanten Faktor ergibt. Eine Auslenkung der Steuerungseinheit zu einem Auslenkungswinkel, der dem isolierten Sollwinkelbeitrag 16 entspricht, würde also dazu führen, dass die Motorlast des Fahrzeugs so angepasst wird, dass das Fahrzeug die gleiche Geschwindigkeit wie das vorausfahrende Fahrzeug einnimmt. Der erste Sollwinkelbetrag 16 bildet die Basis des erfindungsgemäßen Regelungskonzeptes. Der entsprechende Abschnitt des Regelkreises wird auch als Vorsteuerung 21 bezeichnet. Für die weitere Regelung des Abstandes ist ein PD-Regler 22 vorgesehen, der den zweiten Sollwinkelbeitrag 17 zur Verfügung stellt und aus einem proportionalen Anteil 23 und einem differentiellen Anteil 24 besteht.

Bei dem proportionalen Anteil 23 wird das Eingangssignal proportional verstärkt zu einem Ausgangssignal 25. Allerdings ist der Verstärkungsfaktor kein konstanter Faktor, sondern folgt einer Kennlinie. Die Eingangsgröße dieser Kennlinie ist der Betrag der Regeldifferenz 14. Ihre Ausgangsgröße ist der genannte Verstärkungsfaktor.

Das D-Glied 24 ist ein Differenzierer, der auf die zeitliche Veränderung der Regeldifferenz 14 reagiert, d.h. auf die zeitliche Ableitung dieser Eingangsgröße, die sich dynamisch ändert. Erfindungsgemäß ist dabei vorgesehen, dass in Abhängigkeit von der Größe der zeitlichen Ableitung der Regeldifferenz 14 zusätzlich eine Dämpfung oder Verstärkung dieses Pedalwinkelbeitrags vorgenommen wird. Hierdurch wird bei der Umsetzung des differentiellen Beitrags zu dem zweiten Sollwinkelbeitrag eine unruhige Regelung vermieden, um dem Fahrzeugführer ein harmonisches Verhalten der Steuerungseinheit 1 bei der Betätigung zu vermitteln.

Aus dem P-Glied und dem D-Glied ergibt sich dann der zweite Sollwinkelbeitrag 17 durch Superposition bzw. Addition der Beträge.

Neben den ersten und zweiten Sollwinkelbeiträgen 16, 17 ist ein dritter Sollbeitrag 18 vorgesehen, der die Kurvenform und die Steigung der Streckenführung berücksichtigt. Folgt das Fahrzeug einer ansteigenden Bahnkurve, wie dies in einer hügeligen oder bergigen Landschaft beispielsweise der Fall ist, muss der Fahrzeugführer die Motorlast seines Fahrzeugs zusätzlich erhöhen, um seine Geschwindigkeit aufrechtzuerhalten, bzw. die Motorlast reduzieren, wenn die Bahnkurve abfallend verläuft.

Dies wird durch die Regelungseinheit 26, bzw. durch den entsprechenden Sollwinkelbeitrag 18 berücksichtigt. Dabei wird der Betrag der Regeldifferenz 14 fortlaufend mit einem bestimmten Schwellenwert verglichen und erst beim Überschreiten dieses voreingestellten Schwellenwertes wird die Regelungseinheit 26 zur Ermittlung eines weiteren Sollwinkelbeitrags 18 wirksam. Der sich ergebende Sollwinkelbeitrag 18 ergibt gegenüber den anderen Sollwinkelbeiträgen 16, 17 eine Offsetverschiebung, wobei dies entweder eine Addition oder eine Subtraktion in inkrementellen Schritten sein kann.

In einem vierten Regelungskreis 27 werden Anfahrsituationen, wie sie etwa an Verkehrsampeln auftreten, durch eine Modulation des Sollwinkels φₛₒₗₗ berücksichtigt. Beim Anfahren des Fahrzeugs, beispielsweise beim Umschalten einer Ampel von Rot auf Grün, kann der Abstand zwischen zwei Fahrzeugen gegenüber dem Sollabstand dₛₒₗₗ deutlich verringert sein. Da es jedoch zu nicht gewünschten Verzögerungen im Verkehr kommen würde, wenn das eigene Fahrzeug mit dem Anfahren erst dann beginnt, wenn der gegenüber dem vorausfahrenden Fahrzeug einzuhaltende Sollabstand dₛₒₗₗ erreicht ist, ist erfindungsgemäß vorgesehen, für diese Verkehrssituationen eine Verschiebung des Sollwinkels φₛₒₗₗ 15 in Richtung größerer Sollwinkel durch den Regelungskreis 27 vorzunehmen. Hieraus ergibt sich ein weiterer Sollwinkelbeitrag 19

Alle Sollwinkelbeiträge 16, 17, 18 und 19 werden zu einer Summe 28 und 29 zusammengeführt und ergeben dann den Sollwinkel φₛₒₗₗ 15.

Innerhalb des erfindungsgemäßen Regelungskonzeptes ist damit durch verschiedene Algorithmen sichergestellt, dass ein Sollwinkel 15 berechnet wird, der einem vorgegebenen Sollabstand dₛₒₗₗ zum vorausfahrenden Fahrzeug in zuvor beschriebener Weise entspricht. Die Regelung des Sollabstandes wird in letzter Konsequenz durch die zielgerichtete Variation der eigenen Fahrzeuggeschwindigkeit v_{act} bzw. durch ein Anpassen der Motorlast erreicht.

Da sich die Relativgeschwindigkeit vᵣₑₗ zum vorausfahrenden Fahrzeug zeitlich laufend ändert, abhängig von der Ist-Geschwindigkeit v_{act} des eigenen Fahrzeugs und der Geschwindigkeit des vorausfahrenden Fahrzeugs, ändert sich auch der Sollabstand dₛₒₗₗ und damit der Wert des einzustellenden Sollwinkels φₛₒₗₗ durch den beschriebenen dynamischen Regelungsprozess.

Dabei ist das Verfahren jedoch so ausgelegt, dass stets die Möglichkeit bei entsprechender Verkehrssituation gegeben ist, dass der Fahrzeugführer die Modulation der Rückstellkraft ignorieren und die Steuerungseinheit 1 zu größeren Auslenkungen hin betätigen kann.

### Bezugszeichenliste

- 1.: Steuerungseinheit (Fahrpedal)
- 2.: Aktuator
- 3.: Stellglied
- 4.: Regler
- 5.: Pedalplatte
- 6.: Pedalhebel
- 7.: Antriebswelle
- 8.: Antriebsrolle
- 9.: Arm
- 10.: Gehäuse
- 11.: Schnittstelle
- 12.: Rückholfeder
- 13.: Zapfen
- 14.: Regeldifferenz
- 15.: Sollwinkel
- 16.: Sollwinkelbeitrag
- 17.: Sollwinkelbeitrag
- 18.: Sollwinkelbeitrag
- 19.: Sollwinkelbeitrag
- 20.: Offset
- 21.: Vorsteuerung
- 22.: PD-Regler
- 23.: P-Regler
- 24.: D-Regler
- 25.: Ausgangssignal
- 26.: Offsetverschiebung
- 27.: Modulation
- 28.: Summe
- 29.: Summe

## Patentansprüche

1. Verfahren zur Regelung der Rückstellkraft einer Steuerungseinheit von Kraftfahrzeugen, wobei es sich bei der Steuerungseinheit um ein Gaspedal oder einen Gasgriff handelt, wobei eine Betätigung der Steuerungseinheit durch Aufbringen einer Betätigungskraft eine Auslenkung der Steuerungseinheit bewirkt, wobei eine Rückstellkraft auf die Steuerungseinheit wirkt, wobei die Rückstellkraft der Betätigungskraft entgegen und in Richtung der Ausgangslage der Steuerungseinheit gerichtet ist, und wobei die Steuerungseinheit um einen Auslenkungswinkel (φ) ausgelenkt ist, mit folgenden Schritten:
- Bestimmung eines Sollwinkels (φₛₒₗₗ) der Auslenkung der Steuerungseinheit durch einen Regelkreis,
- Bestimmung einer aktuellen Auslenkung (φᵢₛₜ) der Steuerungseinheit,
- in Abhängigkeit der Differenz von aktueller Auslenkung (φᵢₛₜ) und Sollwinkel (φₛₒₗₗ), Modulieren der Rückstellkraft auf die Steuerungseinheit, wobei
ein Regelkreis den Sollwinkel auf Grundlage einer Geschwindigkeit (v_{act}) des Kraftfahrzeugs, einer Relativgeschwindigkeit (vᵣₑₗ) des Kraftfahrzeugs zu einem vorausfahrenden Kraftfahrzeug, einem Sollabstand (dₛₒₗₗ) zum vorausfahrenden Kraftfahrzeug und einem Ist-Abstand (dᵢₛₜ) zum vorausfahrenden Kraftfahrzeug bestimmt,
**dadurch gekennzeichnet,**
a) **dass** der Regelkreis einen PD-Regler beinhaltet, wobei der PD-Regler einen ersten Sollwinkelbeitrag (17) auf Basis der Differenz von Sollabstand (dₛₒₗₗ) zu Ist-Abstand (dᵢₛₜ) erzeugt und
b) **dass** der Regelkreis eine zum PD-Regler parallele Vorsteuerung (21) beinhaltet, wobei die Vorsteuerung auf Basis der Geschwindigkeit (v_{act}), der Relativgeschwindigkeit (vᵣₑₗ) und einer gewichteten Abweichung des Ist-Abstands (dᵢₛₜ) vom Sollabstand (dₛₒₗₗ) einen zweiten Sollwinkelbeitrag (16) erzeugt und
c) **dass** in einem Summierer (28) zumindest aus diesen beiden Sollwinkelbeiträgen der Sollwinkel (φₛₒₗₗ) bestimmt wird.

2. Verfahren nach Anspruch 1, wobei der Regelkreis ferner dazu ausgebildet ist, bei Überschreiten eines Schwellwerts für den Betrag einer Abstandsregelungsabweichung (u) den Betrag des Sollwinkels (φₛₒₗₗ) durch einen dritten Sollwinkelbeitrag (18) zu erhöhen, wenn der Betrag einer Abstandsregelungsabweichung (u) negativ ist, oder zu verringern, wenn Betrag einer Abstandsregelungsabweichung (u) positiv ist, wobei die Abstandsregelungsabweichung (u) durch die Differenz von Sollabstand (dₛₒₗₗ) und Ist-Abstand (dᵢₛₜ) gegeben ist.

3. Verfahren nach einem der Ansprüche 1 oder 2, wobei der Regelkreis ferner dazu ausgebildet ist, bei einer geringen Geschwindigkeit (v_{act}) des Kraftfahrzeugs und bei einem geringen Abstand (dᵢₛₜ) des Kraftfahrzeugs zu einem vorausfahrenden Kraftfahrzeug, wie diese bei Anfahrsituationen vorkommen, mittels weiteren Sollwinkelbeitrags (19) den Betrag des Sollwinkels (φₛₒₗₗ) zu erhöhen.

4. Verfahren nach Anspruch 2, **dadurch gekennzeichnet, dass** der Einheit zur Erzeugung des dritten Sollwinkelbeitrags (18) die Summe der anderen Sollwinkelbeiträge (16,17,19) als zusätzliche Eingangsgröße rückgekoppelt erhält und in Abhängigkeit von der Abstandsregelungsabweichung (u) und den anderen Sollwinkelbeiträgen den dritten Sollwinkelbeitrag (18) ermittelt.

5. Regler (4) für ein Steuerungssystem für ein Kraftfahrzeug zum Ermitteln eines Sollwinkels (φₛₒₗₗ) für eine Steuerungseinheit, wobei es sich bei der Steuerungseinheit um ein Gaspedal oder einen Gasgriff handelt und wobei die Steuerungseinheit aus einer Ausgangslage durch Aufbringen einer Betätigungskraft auf die Steuerungseinheit auslenkbar ist und
a) wobei der Regler (4) Eingänge zur Zuführung von Signalen einer Geschwindigkeit (v_{act}) des Kraftfahrzeugs, einer Relativgeschwindigkeit (vᵣₑₗ) des Kraftfahrzeugs zu einem vorausfahrenden Kraftfahrzeug, einem Sollabstand (dₛₒₗₗ) zum vorausfahrenden Kraftfahrzeug und einem Ist-Abstand (dᵢₛₜ) zum vorausfahrenden Kraftfahrzeug aufweist, **dadurch gekennzeichnet, dass**
b) der Regler (4) einen PD-Regler beinhaltet, um einen ersten Sollwinkelbeitrag (17) auf Basis der Differenz von Sollabstand (dsoll) zu Ist-Abstand (dist) zu erzeugen und
c) eine zum PD-Regler parallele Vorsteuerung (21) beinhaltet, wobei um auf Basis der Geschwindigkeit (v_{act}), der Relativgeschwindigkeit (vᵣₑₗ) und einer gewichteten Abweichung des Ist-Abstands (dᵢₛₜ) vom Sollabstand (dₛₒₗₗ) einen zweiten Sollwinkelbeitrag (16) zu erzeugen und
d) einen Summierer (28), um zumindest aus diesen beiden Sollwinkelbeiträgen den Sollwinkels (φₛₒₗₗ) zu bestimmen.

6. Regler nach Anspruch 5, wobei der Regler ferner dazu ausgebildet ist, den Betrag einer Abstandsregelungsabweichung (u) als Differenz von Sollabstand (dₛₒₗₗ) und Ist-Abstand (dᵢₛₜ) zu erfassen und bei Überschreiten eines Schwellwerts dieser Abstandsregelungsabweichung (u) den Betrag des Sollwinkels (φₛₒₗₗ) durch einen dritten Sollwinkelbeitrag (18) zu erhöhen, wenn der Betrag einer Abstandsregelungsabweichung (u) negativ ist, oder zu verringern, wenn Betrag einer Abstandsregelungsabweichung (u) positiv ist.

7. Regler nach einem der Ansprüche 5 oder 6, wobei der Regelkreis ferner dazu ausgebildet ist, bei einer geringen Geschwindigkeit (v_{act}) des Kraftfahrzeugs und bei einem geringen Abstand (dᵢₛₜ) des Kraftfahrzeugs zu einem vorausfahrenden Kraftfahrzeug, wie diese bei Anfahrsituationen vorkommen, mittels weiteren Sollwinkelbeitrags (19) den Betrag des Sollwinkels (φₛₒₗₗ) zu erhöhen.

8. Regler nach Anspruch 6 oder 7, **dadurch gekennzeichnet, dass** der Einheit zur Erzeugung des dritten Sollwinkelbeitrags (18) die Summe der anderen Sollwinkelbeiträge (16,17,19) als zusätzliche Eingangsgröße rückgekoppelt erhält und in Abhängigkeit von der Abstandsregelungsabweichung (u) und den anderen Sollwinkelbeiträgen den dritten Sollwinkelbeitrag (18) ermittelt.

9. Steuerungssystem für ein Kraftfahrzeug mit einem Regler nach einem der Ansprüche 5 bis 8 zum Durchführen des Verfahrens nach einem der Ansprüche 1 bis 4.

10. Steuerungssystem nach Anspruch 9, mit:
- einer Steuerungseinheit, wobei es sich bei der Steuerungseinheit um ein Gaspedal oder einen Gasgriff handelt und wobei die Steuerungseinheit aus einer Ausgangslage durch Aufbringen einer Betätigungskraft auf die Steuerungseinheit auslenkbar ist,
- einem Auslenkungssensor, wobei der Auslenkungssensor ein Auslenkungssignal erzeugt, aus welchem die aktuelle Auslenkung (φᵢₛₜ) der Steuerungseinheit bestimmt wird,
- einem Rückstellmechanismus, wobei der Rückstellmechanismus eine Rückstellkraft auf die Steuerungseinheit bewirken kann, wobei die Rückstellkraft der Betätigungskraft entgegen wirkt,
- einem Aktuator, wobei der Aktuator so mit der Steuerungseinheit gekoppelt ist, dass er die Rückstellkraft auf die Steuerungseinheit durch Aufbringen einer zusätzlichen Rückstell- oder Betätigungskraft in Abhängigkeit des Auslenkungssignals modulieren kann,
- ferner mit einem Stellglied, wobei das Stellglied dazu ausgebildet ist aus dem Auslenkungssignal die aktuelle Auslenkung φᵢₛₜ der Steuerungseinheit zu bestimmen und wobei das Stellglied so mit dem Aktuator gekoppelt ist, dass es die Modulation der Rückstellkraft durch den Aktuator in Abhängigkeit der aktuellen Auslenkung φᵢₛₜ steuern kann, wobei das Stellglied die Modulation der Rückstellkraft auf die Steuerungseinheit durch den Aktuator in Abhängigkeit der Differenz von aktueller Auslenkung (φᵢₛₜ) und einem Sollwinkel (φₛₒₗₗ) steuert,
wobei ein Regler (4) vorgesehen ist,
a) welcher Eingänge zur Zuführung von Signalen einer Geschwindigkeit (v_{act}) des Kraftfahrzeugs, einer Relativgeschwindigkeit (vᵣₑₗ) des Kraftfahrzeugs zu einem vorausfahrenden Kraftfahrzeug, einem Sollabstand (dₛₒₗₗ) zum vorausfahrenden Kraftfahrzeug und einem Ist-Abstand (dᵢₛₜ) zum vorausfahrenden Kraftfahrzeug aufweist und
b) welcher einen PD-Regler beinhaltet, um einen ersten Sollwinkelbeitrag (17) auf Basis der Differenz von Sollabstand (dₛₒₗₗ) zu Ist-Abstand (dᵢₛₜ) zu erzeugen und
c) eine zum PD-Regler parallele Vorsteuerung (21) beinhaltet, wobei um auf Basis der Geschwindigkeit (v_{act}), der Relativgeschwindigkeit (vᵣₑₗ) und einer gewichteten Abweichung des Ist-Abstands (dᵢₛₜ) vom Sollabstand (dₛₒₗₗ) einen zweiten Sollwinkelbeitrag (16) zu erzeugen und
d) einen Summierer (28), um zumindest aus diesen beiden Sollwinkelbeiträgen den Sollwinkel (φₛₒₗₗ) zu bestimmen.

## Claims

1. Method for regulating the resetting force of a control unit of motor vehicles, wherein the control unit is an accelerator pedal or an accelerator handle, wherein an actuation of the control unit by application of an actuation force effects a deflection of the control unit, wherein a resetting force acts on the control unit, wherein the resetting force is directed counter to the actuation force and in the direction of the initial position of the control unit, and wherein the control unit is deflected by a deflection angle (φ), having the following steps:
- determining a setpoint angle (φₛₒₗₗ) of the deflection of the control unit by means of a regulating loop,
- determining a present deflection (φᵢₛₜ) of the control unit,
- modulating the resetting force on the control unit in a manner dependent on the difference between present deflection (φᵢₛₜ) and setpoint angle (φₛₒₗₗ), wherein
a regulating loop determines the setpoint angle on the basis of a speed (v_{act}) of the motor vehicle, a relative speed (vᵣₑₗ) of the motor vehicle in relation to a vehicle travelling ahead, a setpoint distance (dₛₒₗₗ) to the motor vehicle travelling ahead, and an actual distance (dᵢₛₜ) to the motor vehicle travelling ahead,
**characterized**
a) **in that** the regulating loop comprises a PD regulator, wherein the PD regulator generates a first setpoint angle contribution (17) on the basis of the difference between setpoint distance (dₛₒₗₗ) and actual distance (dᵢₛₜ), and
b) **in that** the regulating loop comprises a pilot controller (21) in parallel with the PD regulator, wherein the pilot controller generates a second setpoint angle contribution (16) on the basis of the speed (v_{act}), the relative speed (vᵣₑₗ) and a weighted deviation of the actual distance (dᵢₛₜ) from the setpoint distance (dₛₒₗₗ) , and
c) **in that** the setpoint angle (φₛₒₗₗ) is determined in a summing unit (28) at least from said two setpoint angle contributions.

2. Method according to Claim 1, wherein the regulating loop is furthermore designed to, in the event of an exceedance of a threshold value for the magnitude of a distance regulation deviation (u), increase the magnitude of the setpoint angle (φₛₒₗₗ) by a third setpoint angle contribution (18) if the magnitude of a distance regulation deviation (u) is negative, or decrease said magnitude of the setpoint angle if the magnitude of a distance regulation deviation (u) is positive, wherein the distance regulation deviation (u) is given by the difference between setpoint distance (dₛₒₗₗ) and actual distance (dᵢₛₜ).

3. Method according to either of Claims 1 and 2, wherein the regulating loop is furthermore designed to increase the magnitude of the setpoint angle (φₛₒₗₗ) by means of further setpoint angle contributions (19) in the presence of a low speed (v_{act}) of the motor vehicle and in the presence of a small distance (dᵢₛₜ) of the motor vehicle to a motor vehicle travelling ahead, such as arise in launch situations.

4. Method according to Claim 2, **characterized in that** the unit for generating the third setpoint angle contribution (18) receives the sum of the other setpoint angle contributions (16, 17, 19) as additional input variables by feedback, and determines the third setpoint angle contribution (18) in a manner dependent on the distance regulation deviation (u) and the other setpoint angle contributions.

5. Regulator (4) for a control system for a motor vehicle for determining a setpoint angle (φₛₒₗₗ) for a control unit, wherein the control unit is an accelerator pedal or an accelerator handle, and wherein the control unit can be deflected from an initial position by application of an actuation force to the control unit, and
a) wherein the regulator (4) has inputs for the feed of signals of a speed (v_{act}) of the motor vehicle, of a relative speed (vᵣₑₗ) of the motor vehicle in relation to a motor vehicle travelling ahead, of a setpoint distance (dₛₒₗₗ) to the motor vehicle travelling ahead, and of an actual distance (dᵢₛₜ) to the motor vehicle travelling ahead, **characterized in that**
b) the regulator (4) comprises a PD regulator for generating a first setpoint angle contribution (17) on the basis of the difference between setpoint distance (dₛₒₗₗ) and actual distance (dᵢₛₜ), and
c) comprises a pilot controller (21) in parallel with the PD regulator, wherein in order to generate a second setpoint angle contribution (16) on the basis of the speed (v_{act}), of the relative speed (vᵣₑₗ) and of a weighted deviation of the actual distance (dᵢₛₜ) from the setpoint distance (dₛₒₗₗ), and
d) a summing unit (28) for determining the setpoint angle (φₛₒₗₗ) at least from said two setpoint angle contributions.

6. Regulator according to Claim 5, wherein the regulator is furthermore designed to detect the magnitude of a distance regulation deviation (u) as a difference between setpoint distance (dₛₒₗₗ) and actual distance (dᵢₛₜ), and to, in the event of an exceedance of a threshold value of said distance regulation deviation (u), increase the magnitude of the setpoint angle (φₛₒₗₗ) by a third setpoint angle contribution (18) if the magnitude of a distance regulation deviation (u) is negative, or decrease said magnitude of the setpoint angle if the magnitude of a distance regulation deviation (u) is positive.

7. Regulator according to either of Claims 5 and 6, wherein the regulating loop is furthermore designed to increase the magnitude of the setpoint angle (φₛₒₗₗ) by means of further setpoint angle contributions (19) in the presence of a low speed (v_{act}) of the motor vehicle and in the presence of a small distance (dᵢₛₜ) of the motor vehicle to a motor vehicle travelling ahead, such as arise in launch situations.

8. Regulator according to Claim 6 or 7, **characterized in that** the unit for generating the third setpoint angle contribution (18) receives the sum of the other setpoint angle contributions (16, 17, 19) as additional input variables by feedback, and determines the third setpoint angle contribution (18) in a manner dependent on the distance regulation deviation (u) and the other setpoint angle contributions.

9. Control system for a motor vehicle having a regulator according to one of Claims 5 to 8 for carrying out the method according to one of Claims 1 to 4.

10. Control system according to Claim 9, having:
- a control unit, wherein the control unit is an accelerator pedal or an accelerator handle, and wherein the control unit can be deflected from an initial position by application of an actuation force to the control unit,
- a deflection sensor, wherein the deflection sensor generates a deflection signal from which the present deflection (φᵢₛₜ) of the control unit is determined,
- a resetting mechanism, wherein the resetting mechanism can impart a resetting force to the control unit, wherein the resetting force acts counter to the actuation force,
- an actuator, wherein the actuator is coupled to the control unit such that said actuator can modulate the resetting force on the control unit by application of an additional resetting or actuation force in a manner dependent on the deflection signal,
- furthermore having a setting element, wherein the setting element is designed to determine the present deflection (φᵢₛₜ) of the control unit from the deflection signal, and wherein the setting element is coupled to the actuator such that said setting element can control the modulation of the resetting force by the actuator in a manner dependent on the present deflection (φᵢₛₜ), wherein the setting element controls the modulation of the resetting force on the control unit by the actuator in a manner dependent on the difference between present deflection (φᵢₛₜ) and a setpoint angle (φₛₒₗₗ),
wherein a regulator (4) is provided,
a) which has inputs for the feed of signals of a speed (v_{act}) of the motor vehicle, of a relative speed (vᵣₑₗ) of the motor vehicle in relation to a motor vehicle travelling ahead, of a setpoint distance (dₛₒₗₗ) to the motor vehicle travelling ahead and of an actual distance (dᵢₛₜ) to the motor vehicle travelling ahead, and
b) which comprises a PD regulator for generating a first setpoint angle contribution (17) on the basis of the difference between setpoint distance (dₛₒₗₗ) and actual distance (dᵢₛₜ), and
c) comprises a pilot controller (21) in parallel with the PD regulator, wherein in order to generate a second setpoint angle contribution (16) on the basis of the speed (v_{act}), of the relative speed (vᵣₑₗ) and of a weighted deviation of the actual distance (dᵢₛₜ) from the setpoint distance (dₛₒₗₗ), and
d) a summing unit (28) for determining the setpoint angle (φₛₒₗₗ) at least from said two setpoint angle contributions.

## Revendications

1. Procédé de régulation de la force de rappel d'une unité de commande de véhicules automobiles, l'unité de commande étant une pédale d'accélérateur ou une poignée des gaz, un actionnement de l'unité de commande par application d'une force d'actionnement provoquant une déviation de l'unité de commande, une force de rappel agissant sur l'unité de commande, la force de rappel étant dirigée à l'opposé de la force d'actionnement et en direction de la position initiale de l'unité de commande, et l'unité de commande étant déviée d'un angle de déviation (φ), comprenant les étapes suivantes :
- détermination d'un angle de consigne (φₛₒₗₗ) de la déviation de l'unité de commande par un circuit de régulation,
- détermination d'une déviation actuelle (φᵢₛₜ) de l'unité de commande,
- suivant la différence entre la déviation actuelle (φᵢₛₜ) et l'angle de consigne (φₛₒₗₗ₎, modulation de la force de rappel sur l'unité de commande,
un circuit de régulation déterminant l'angle de consigne en se basant sur une vitesse (v_{act}) du véhicule automobile, une vitesse relative (vᵣₑₗ) du véhicule automobile par rapport à un véhicule automobile qui précède, une distance de consigne (dₛₒₗₗ) par rapport au véhicule automobile qui précède et une distance réelle (dᵢₛₜ) par rapport au véhicule automobile qui précède, **caractérisé en ce que**
a) le circuit de régulation contient un régulateur PD, le régulateur PD produisant une première contribution d'angle de consigne (17) sur la base de la différence entre la distance de consigne (dₛₒₗₗ) et la distance réelle (dᵢₛₜ) et
b) le circuit de régulation contient une commande pilote (21) en parallèle avec le régulateur PD, la commande pilote produisant une deuxième contribution d'angle de consigne (16) sur la base de la vitesse (v_{act}), de la vitesse relative (vᵣₑₗ) et d'un écart pondéré entre la distance réelle (dᵢₛₜ) et la distance de consigne (dₛₒₗₗ) et
c) l'angle de consigne (φₛₒₗₗ) est déterminé dans un additionneur (28) au moins à partir de ces deux contributions à l'angle de consigne.

2. Procédé selon la revendication 1, le circuit de régulation étant en outre conçu pour, en cas de dépassement d'un seuil pour la valeur d'un écart de la régulation de distance (u), augmenter la valeur de l'angle de consigne (φₛₒₗₗ) par une troisième contribution à l'angle de consigne (18) lorsque la valeur d'un écart de la régulation de distance (u) est négative ou la réduire lorsque la valeur d'un écart de la régulation de distance (u) est positive, l'écart de la régulation de distance (u) étant indiqué par la différence entre la distance de consigne (dₛₒₗₗ) et la distance réelle (dᵢₛₜ).

3. Procédé selon l'une des revendications 1 ou 2, le circuit de régulation étant en outre conçu pour, en présence d'une faible vitesse (v_{act}) du véhicule automobile et en présence d'une faible distance (dᵢₛₜ) du véhicule automobile par rapport à un véhicule automobile qui précède, comme ceci se produit dans les situations de démarrage, augmenter la valeur de l'angle de consigne (φₛₒₗₗ) au moyen d'une contribution à l'angle de consigne (19) supplémentaire.

4. Procédé selon la revendication 2, **caractérisé en ce que** l'unité destinée à produire la troisième contribution à l'angle de consigne (18) obtient comme grandeur d'entrée supplémentaire la somme renvoyée des autres contributions à l'angle de consigne (16, 17, 19) et détermine la troisième contribution à l'angle de consigne (18) en fonction de l'écart de la régulation de distance (u) et des autres contributions à l'angle de consigne.

5. Régulateur (4) pour un système de commande pour un véhicule automobile destiné à déterminer un angle de consigne (φₛₒₗₗ) pour une unité de commande, l'unité de commande étant une pédale d'accélérateur ou une poignée des gaz et l'unité de commande pouvant être déviée depuis une position initiale en appliquant une force d'actionnement sur l'unité de commande, et
a) le régulateur (4) possédant des entrées servant à l'acheminement de signaux d'une vitesse (v_{act}) du véhicule automobile, d'une vitesse relative (vᵣₑₗ) du véhicule automobile par rapport à un véhicule automobile qui précède, d'une distance de consigne (dₛₒₗₗ) par rapport au véhicule automobile qui précède et d'une distance réelle (dᵢₛₜ) par rapport au véhicule automobile qui précède,
**caractérisé en ce que**
b) le régulateur (4) contient un régulateur PD, afin de produire une première contribution d'angle de consigne (17) sur la base de la différence entre la distance de consigne (dₛₒₗₗ) et la distance réelle (dᵢₛₜ) et
c) contient une commande pilote (21) en parallèle avec le régulateur PD, dans laquelle afin de produire une deuxième contribution d'angle de consigne (16) sur la base de la vitesse (v_{act}), de la vitesse relative (vᵣₑₗ) et d'un écart pondéré entre la distance réelle (dᵢₛₜ) et la distance de consigne (dₛₒₗₗ) et
d) un additionneur (28) afin de déterminer l'angle de consigne (φₛₒₗₗ) au moins à partir de ces deux contributions à l'angle de consigne.

6. Régulateur selon la revendication 5, le régulateur étant en outre conçu pour acquérir la valeur d'un écart de la régulation de distance (u) en tant que différence entre la distance de consigne (dₛₒₗₗ) et la distance réelle (dᵢₛₜ) et, en cas de dépassement d'un seuil de cet écart de la régulation de distance (u), augmenter la valeur de l'angle de consigne (φₛₒₗₗ) par une troisième contribution à l'angle de consigne (18) lorsque la valeur d'un écart de la régulation de distance (u) est négative ou la réduire lorsque la valeur d'un écart de la régulation de distance (u) est positive.

7. Régulateur selon l'une des revendications 5 ou 6, le circuit de régulation étant en outre conçu pour, en présence d'une faible vitesse (v_{act}) du véhicule automobile et en présence d'une faible distance (dᵢₛₜ) du véhicule automobile par rapport à un véhicule automobile qui précède, comme ceci se produit dans les situations de démarrage, augmenter la valeur de l'angle de consigne (φₛₒₗₗ) au moyen d'une contribution à l'angle de consigne (19) supplémentaire.

8. Régulateur selon la revendication 6 ou 7, **caractérisé en ce que** l'unité destinée à produire la troisième contribution à l'angle de consigne (18) obtient comme grandeur d'entrée supplémentaire la somme renvoyée des autres contributions à l'angle de consigne (16, 17, 19) et détermine la troisième contribution à l'angle de consigne (18) en fonction de l'écart de la régulation de distance (u) et des autres contributions à l'angle de consigne.

9. Système de commande pour un véhicule automobile, comprenant un régulateur selon l'une des revendications 5 à 8 pour mettre en oeuvre le procédé selon l'une des revendications 1 à 4.

10. Système de commande selon la revendication 9, comprenant :
- une unité de commande, l'unité de commande étant une pédale d'accélérateur ou une poignée des gaz et l'unité de commande pouvant être déviée depuis une position initiale en appliquant une force d'actionnement sur l'unité de commande,
- un capteur de déviation, le capteur de déviation générant un signal de déviation à partir duquel est déterminée la déviation actuelle (φᵢₛₜ) de l'unité de commande,
- un mécanisme de rappel, le mécanisme de rappel pouvant produire une force de rappel sur l'unité de commande, la force de rappel agissant à l'opposé de la force d'actionnement,
- un actionneur, l'actionneur étant accouplé à l'unité de commande de telle sorte qu'il peut moduler la force de rappel sur l'unité de commande en appliquant une force de rappel ou d'actionnement supplémentaire en fonction du signal de déviation,
- comprenant en outre un élément de commande, l'élément de commande étant conçu pour déterminer la déviation actuelle φᵢₛₜ de l'unité de commande à partir du signal de déviation et l'élément de commande étant accouplé à l'actionneur de telle sorte qu'il peut commander la modulation de la force de rappel par l'actionneur en fonction de la déviation actuelle φᵢₛₜ, l'élément de commande commandant la modulation de la force de rappel sur l'unité de commande par l'actionneur en fonction de la différence entre la déviation actuelle (φᵢₛₜ) et un angle de consigne (φₛₒₗₗ), un régulateur (4) étant présent,
a) lequel possède des entrées servant à l'acheminement de signaux d'une vitesse (v_{act}) du véhicule automobile, d'une vitesse relative (vᵣₑₗ) du véhicule automobile par rapport à un véhicule automobile qui précède, d'une distance de consigne (dₛₒₗₗ) par rapport au véhicule automobile qui précède et d'une distance réelle (dᵢₛₜ) par rapport au véhicule automobile qui précède et
**caractérisé en ce que**
b) lequel contient un régulateur PD, afin de produire une première contribution d'angle de consigne (17) sur la base de la différence entre la distance de consigne (dₛₒₗₗ) et la distance réelle (dᵢₛₜ) et
c) contient une commande pilote (21) en parallèle avec le régulateur PD, dans laquelle afin de produire une deuxième contribution d'angle de consigne (16) sur la base de la vitesse (v_{act}), de la vitesse relative (vᵣₑₗ) et d'un écart pondéré entre la distance réelle (dᵢₛₜ) et la distance de consigne (dₛₒₗₗ) et
d) un additionneur (28) afin de déterminer l'angle de consigne (φₛₒₗₗ) au moins à partir de ces deux contributions à l'angle de consigne.
